# FASCICULE DE BREVET EUROPEEN

(11) **EP 1 083 442 B1**
(45) Date de publication et mention de la délivrance du brevet: **05.03.2003**
(21) Numéro de dépôt: 00402440.2
(22) Date de dépôt: 05.09.2000
(51) Int. Cl.: G01S 7/40

(54) **Procédé et dispositif pour l'alignement d'un radar automobile**
Verfahren und Vorrichtung zur Kraftfahrzeug-Radargerätausrichtung
Method and apparatus for motor vehicle radar alignment

(30) Priorité: 07.09.1999 FR 9911182
(43) Date de publication de la demande: 14.03.2001
(73) Titulaire: Thales, 75008 Paris (FR)
(72) Inventeur: Henrio, Jean-Francois, Thomson-CSF Prop. Intel., 94117 Arcueil Cedex (FR); Artis, Jean-Paul, Thomson-CSF Prop. Intellectuelle, 94117 Arcueil Cedex (FR)
(74) Mandataire: Lucas, Laurent Jacques

(56) Documents cités:
- EP-A- 0 905 526
- EP-A- 0 936 472
- DE-A- 19 642 811
- DE-A- 19 707 590
- GB-A- 2 334 842

## Description

La présente invention concerne une méthode et un dispositif de réglage de l'alignement d'un radar pour automobiles, plus particulièrement pour l'alignement de l'axe radioélectrique du radar par rapport à une direction donnée relative au véhicule. La méthode et le dispositif s'appliquent notamment à l'alignement de l'axe radioélectrique du radar sur l'axe de poussée du véhicule.

Plusieurs types de radars peuvent équiper des véhicules automobiles. Parmi ceux-ci sont notamment connus les radars du type dit ACC selon l'expression anglo-saxonne « Automotive Cruise Control ». Un radar de ce type est destiné à permettre la régulation de l'allure des véhicules. Il détecte et localise le plus proche véhicule situé dans la voie du porteur. Pour cette application, le radar nécessite par exemple une portée de l'ordre de 150 mètres. Il doit en particulier être capable de détecter si un véhicule est situé dans la voie du porteur à cette distance. En raison de l'existence de sources d'imprécision intervenant dans la localisation angulaire, l'axe radioélectrique du radar doit être aligné en azimut avec la tangente à la trajectoire du véhicule porteur. L'axe de poussée est la tangente à la trajectoire suivie par le véhicule lorsque le conducteur lâche le volant. Pour un véhicule ne possédant pas de défaut grave, notamment au niveau de la géométrie des trains de roulement ou de la qualité des pneumatiques, cette trajectoire est une droite ou une courbe de grand rayon de courbure. L'axe de poussée est très sensiblement la bissectrice de l'angle formé par la projection horizontale des axes des roues arrière. L'axe radioélectrique est l'axe selon lequel le radar mesure un écart angulaire nul pour un objet situé sur cet axe. L'alignement doit être réalisé à mieux que 0,2° environ, ce qui constitue un alignement très précis. Le réglage de cet alignement consiste à rendre l'axe radioélectrique du radar parallèle à l'axe de poussée du véhicule porteur.

Pour des raisons qui prennent en compte l'esthétique du véhicule, le radar est positionné derrière un élément de carrosserie ou il est dissimulé derrière un cache. L'élément de carrosserie ou le cache sont réalisés dans une matière spécialement conçue pour ne pas ou peu, atténuer et dévier les ondes hyperfréquences.

L'alignement du radar doit pouvoir être effectué rapidement et précisément en chaîne de montage. Tout comme l'alignement des phares et le réglage du parallélisme des roues, l'alignement du radar fait partie des opérations terminales de fabrication du véhicule. Il doit pouvoir être effectué d'une manière simple et automatique, en particulier il ne doit pas nécessiter d'opération de démontage.

Pour effectuer le réglage de l'alignement, plusieurs techniques de réglage sont connues. Certaines techniques mettent en oeuvre un dispositif optique ou électro-optique.

De telles techniques nécessitent un accès optique au radar, soit pour fixer un outillage, soit pour permettre une localisation latérale précise du radar par rapport au montage utilisé pour l'alignement. Ces contraintes nécessitent d'effectuer le réglage d'alignement avant l'installation du « cache esthétique ». Dans ces conditions, seule une correction a priori permet de prendre en compte une éventuelle déviation d'axe provoquée par le cache esthétique du radar. Ainsi, cette technique ne se suffit pas à elle-même pour permettre un réglage qui réponde aux exigences d'alignement. Elle nécessite d'évaluer la déviation d'axe que peut introduire le cache esthétique. Par ailleurs, le montage du cache esthétique ne peut intervenir qu'après le réglage d'alignement ; sinon une opération de démontage dudit cache doit être effectuée préalablement au réglage. Cette contrainte est peu compatible des chaînes de montage de véhicules.

L'invention a notamment pour but de remédier aux inconvénients précédents. A cet effet, l'invention a pour objet un procédé de réglage de l'alignement de l'axe radioélectrique d'un radar installé sur un véhicule garé sur un plan de roulage, par rapport à une direction déterminée relative au véhicule, au moyen d'un banc de réglage comprenant un goniomètre répondeur monté sur un axe de déplacement perpendiculaire à l'axe du banc, caractérisé en ce qu'il consiste :
- à acquérir les angles α et β, α étant l'azimut sous lequel le radar voit le goniomètre répondeur et β étant l'angle entre la direction déterminée et l'axe du banc,
- à déterminer l'azimut γ du radar au moyen du goniomètre répondeur lorsque le radar, configuré en mode de test, émet une fréquence continue,
- à égaliser l'azimut γ avec l'angle β en translatant le goniomètre répondeur le long de son axe de déplacement,
- à annuler l'azimut α en actionnant les moyens de réglage en azimut du radar.

L'invention a aussi pour objet un banc de réglage pour la mise en oeuvre du procédé, comprenant :
- un axe de référence lié au plan de roulage,
- un goniomètre répondeur, positionné par rapport au plan de roulage et ayant une bande de fréquence compatible de celle du radar, pour localiser angulairement par écartométrie le radar lorsque ce dernier émet une fréquence continue suivant un mode de test,
- un dispositif d'interface et de contrôle connecté au radar pour configurer le radar en mode de test et pour acquérir l'azimut α du répondeur goniomètre mesuré par le radar.

Le procédé permet en particulier d'aligner précisément l'axe radioélectrique du radar avec l'axe de poussée du véhicule porteur. Le procédé ne nécessite aucun démontage. Il peut être automatisé. Il peut tout aussi bien être mis en oeuvre dans une chaîne, après la phase finale d'assemblage, que dans un garage lors d'opérations de maintenance.

Le dispositif comprend un goniomètre répondeur dont la majorité des spécifications peut être déduite des spécifications du radar. Cette caractéristique permet de fabriquer le dispositif selon l'invention avec des coûts très réduits. Le dispositif est compact ; il peut être intégré à une chaîne de montage de véhicules.

D'autres caractéristiques et avantages de l'invention apparaîtront à l'aide de la description qui suit. La description est faite en regard des dessins annexés qui représentent :
- la figure 1, une illustration du procédé selon l'invention,
- la figure 2, le procédé sous la forme d'un organigramme,
- la figure 3, une première variante du procédé sous la forme d'un organigramme,
- la figure 4, une illustration d'une seconde variante du procédé,
- la figure 5, la seconde variante du procédé sous la forme d'un organigramme,
- la figure 6, un dispositif selon l'invention,
- la figure 7, une représentation schématique d'un goniomètre répondeur du dispositif de la figure 6,

Sur les différentes figures, les éléments homologues sont référencés par une même référence.

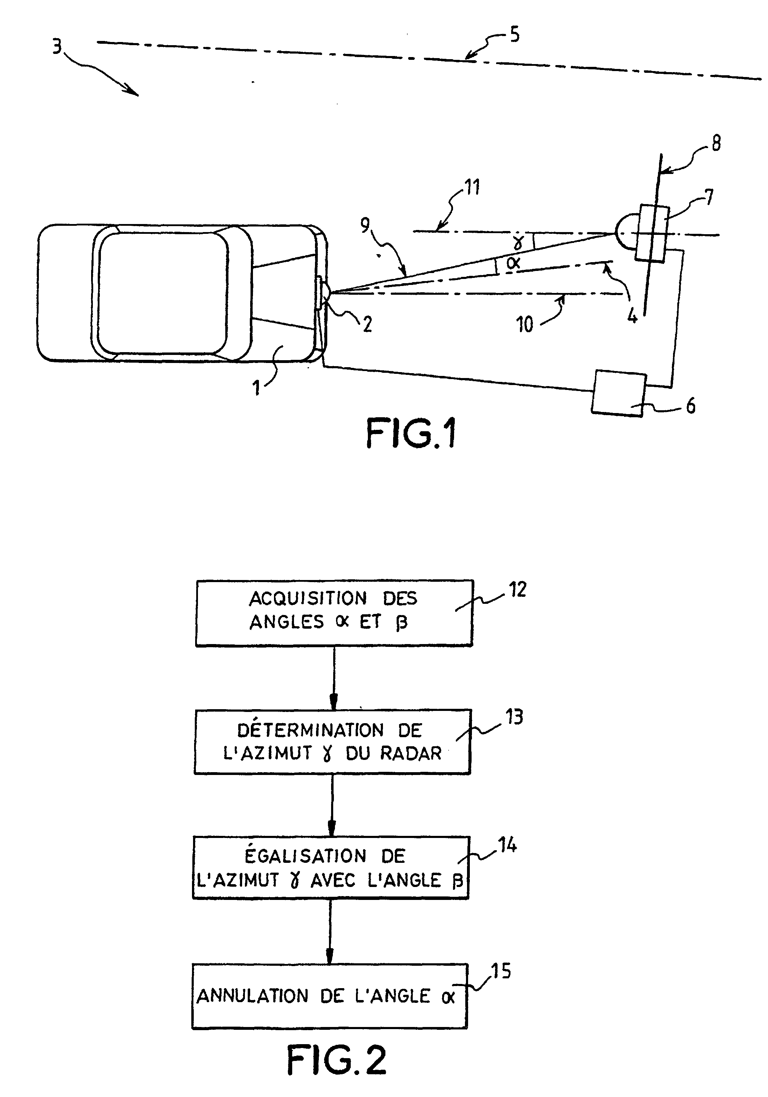

La figure 1 illustre le procédé de réglage de l'alignement de l'axe radioélectrique d'un radar installé sur un véhicule.

Le véhicule 1 équipé du radar 2 est garé sur un plan de roulage 3. Le plan de roulage 3 est associé à un banc de réglage de l'alignement de l'axe radioélectrique 4 du radar 2. Le radar 2 est équipé de moyens de réglage en azimut et de préférence de moyens de réglage en site.

Le banc de réglage comprend un axe de référence 5, un dispositif d'interface et de contrôle 6 et un goniomètre répondeur 7. Le banc de réglage est positionné de manière déterminée par rapport au plan de roulage 3. Le dispositif d'interface et de contrôle 6 est relié, d'une part au radar 2 à aligner et, d'autre part au goniomètre répondeur 7. Le goniomètre répondeur 7 peut comporter un axe de déplacement 8 perpendiculaire à l'axe de référence 5 et de préférence parallèle au plan de roulage 3.

L'angle α est l'angle entre, premièrement la ligne de visée 9 du radar 2 sur la cible (le goniomètre répondeur 7) et, deuxièment l'axe radioélectrique 4 du radar 2.

L'angle β, non représenté, est l'angle entre une direction déterminée 10 relative au véhicule et l'axe de référence 5.

L'azimut γ est l'angle entre, premièrement la ligne de visée 9 du goniomètre répondeur 7 sur la cible (le radar) et, deuxièmenent l'axe radioélectrique 11 du goniomètre répondeur 7 .

Le procédé selon l'invention consiste à aligner l'axe radioélectrique 4 du radar 2 avec la direction déterminée 10.

Les étapes du procédé sont représentées sous la forme d'un organigramme à la figure 2.

Dans un premier mode de mise en oeuvre du procédé, la direction déterminée 10 coïncide avec l'axe de poussée du véhicule 1. Dans ce cas, l'angle β peut être déterminé au moyen d'un banc de réglage des trains.

Le procédé consiste, dans une première étape, à acquérir 12 l'angle α et l'angle β. L'acquisition peut être entièrement automatique et effectuée au moyen du dispositif d'interface et de contrôle. Dans ce cas le dispositif d'interface et de contrôle a une liaison avec le dispositif de mesure de l'angle β pour acquérir automatiquement l'angle β.

Dans une deuxième étape, le procédé consiste à déterminer 13 l'azimut γ du radar, de préférence au moyen du goniomètre répondeur. Une méthode consiste à configurer le radar en mode de test, par exemple au moyen du dispositif d'interface et de contrôle. Selon ce mode, le radar émet une fréquence de manière continue. Ceci permet à l'oscillateur local du goniomètre répondeur de s'accorder en fonction de la fréquence émise par le radar pour que la différence de fréquence entre les fréquences du radar et du goniomètre répondeur soit dans la bande des récepteurs du radar et du goniomètre répondeur.

Dans une troisième étape, le procédé consiste à égaliser 14 l'azimut γ avec l'angle β. Une méthode consiste à translater le goniomètre répondeur le long de son axe de déplacement jusqu'à ce que l'azimut γ du radar soit égal à l'angle β. La translation du goniomètre répondeur peut être contrôlée automatiquement par des consignes de mouvement générées par le dispositif d'interface et de contrôle.

Dans une quatrième étape, le procédé consiste à annuler 15 l'angle α sous lequel le radar voit le goniomètre répondeur. L'annulation peut être obtenue en actionnant les moyens de réglage en azimut du radar pour modifier le réglage en azimut du positionnement du radar. Dans une procédure automatique, les moyens de réglage du positionnement en azimut du radar peuvent être commandés par le dispositif d'interface et de contrôle.

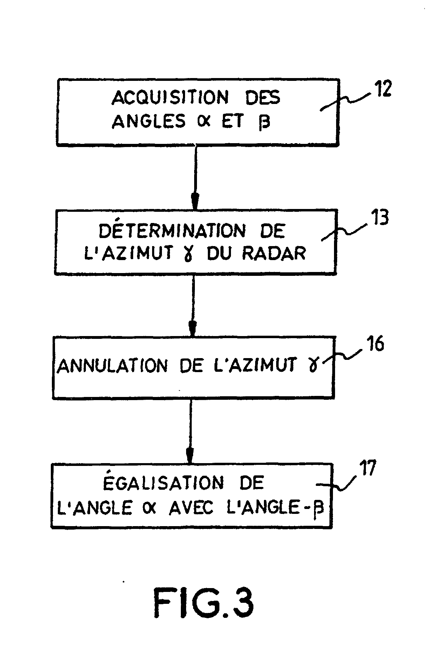

Une première variante au procédé comprend quatre étapes. Cette première variante est représentée sous la forme d'un organigramme à la figure 3.

La première étape d'acquisition 12 et la deuxième étape de détermination 13 sont identiques aux première et deuxième étapes décrites en regard de la figure 2.

La troisième étape consiste à annuler 16 l'azimut γ. Une méthode consiste à translater le goniomètre répondeur le long de son axe de déplacement jusqu'à ce que l'azimut γ soit égale à zéro. La translation du goniomètre répondeur peut être contrôlée automatiquement par des consignes de mouvement générées par le dispositif d'interface et de contrôle.

La quatrième étape consiste à égaliser 17 l'angle α sous lequel le radar voit le goniomètre répondeur avec l'inverse de l'angle β. L'égalisation peut être obtenue en actionnant les moyens de réglage en azimut du radar pour modifier le réglage en azimut du positionnement du radar. Dans une procédure automatique, les moyens de réglage du positionnement en azimut du radar peuvent être commandés par le dispositif d'interface et de contrôle.

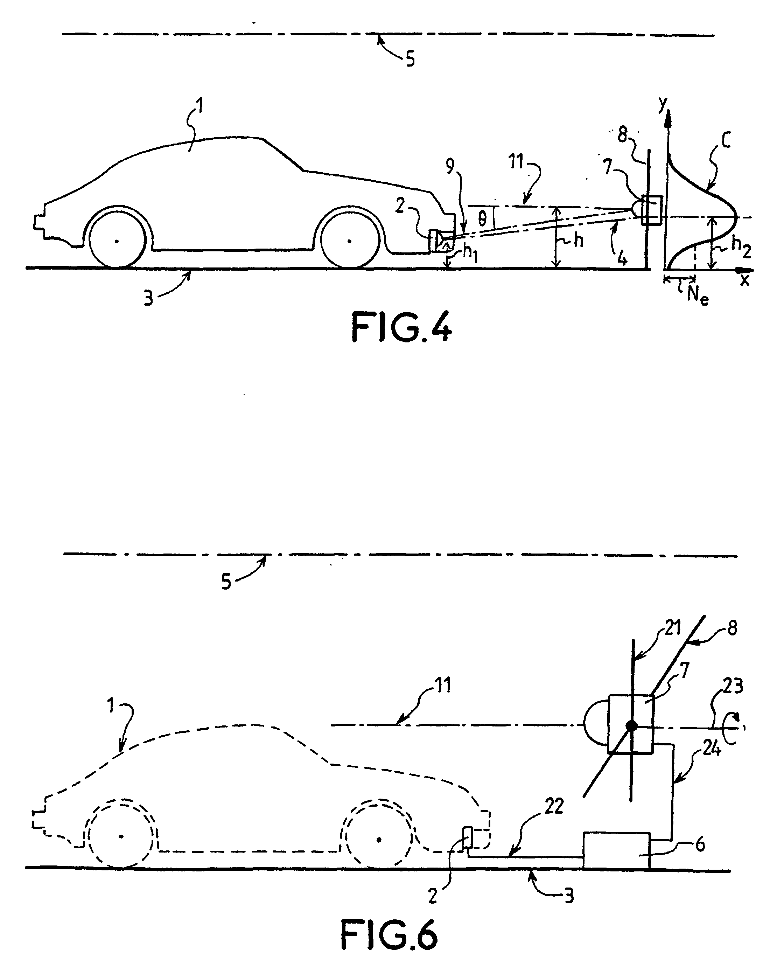

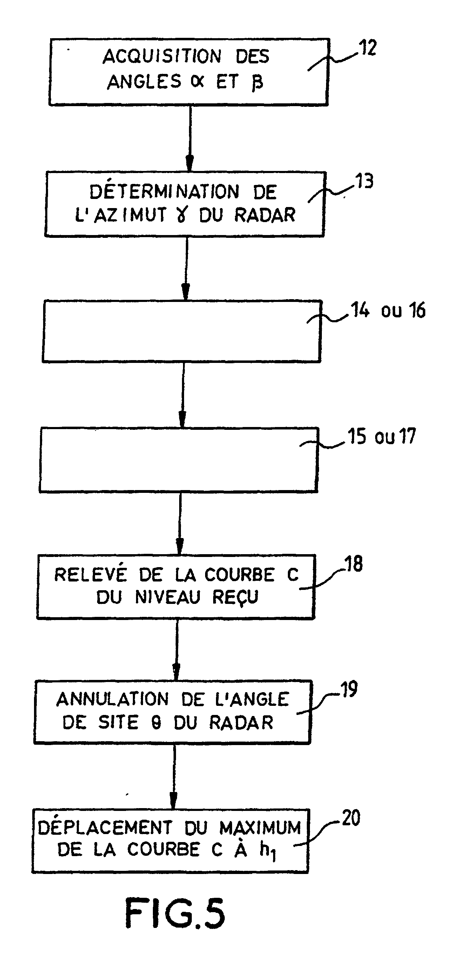

La figure 4 illustre une seconde variante du procédé selon l'invention. Cette seconde variante est représentée sous la forme d'un organigramme à la figure 5.

Selon cette seconde variante, les étapes une à quatre du procédé sont identiques à celles décrites en regard de la figure 2 ou sont identiques à celles de la première variante. Le procédé consiste à effectuer de manière complémentaire un réglage en site du positionnement du radar 2 pour aligner son axe radioélectrique suivant le plan de roulage qui sert de plan de référence.

Dans une cinquième étape, le procédé consiste à relever 18 la courbe C en site du niveau reçu Ne par le goniomètre répondeur 7 pendant l'émission du radar 2 en fonction de la position h du goniomètre répondeur 7 pour déterminer le niveau maximum reçu par le goniomètre répondeur 7. Une méthode consiste à tourner l'antenne du goniomètre répondeur 7 pour que son axe de déplacement 8 soit perpendiculaire au plan de roulage 3.

h₁ est la hauteur, par rapport au plan de roulage 3, à laquelle est installée le radar 2 sur le véhicule 1.

h est la hauteur, par rapport au plan de roulage 3, à laquelle est positionné le goniomètre répondeur 7.

A la hauteur h, le procédé consiste à mesurer le niveau reçu Ne par le goniomètre répondeur 7 pendant l'émission du radar 2. Puis le procédé modifie la position h du goniomètre répondeur 7 pour relever la courbe C en site du niveau reçu Ne par le goniomètre répondeur 7 pendant l'émission du radar 2 en fonction de la position h du goniomètre répondeur 7. Le changement de la position du goniomètre répondeur 7 peut être effectué en translatant le goniomètre répondeur 7 sur son axe de déplacement 8.

L'axe x de la courbe C représente le niveau reçu Ne par le goniomètre répondeur 7 pendant l'émission du radar 2. L'axe y de la courbe C représente la position h du goniomètre répondeur 7. Le maximum de la courbe C correspond à une position h du goniomètre répondeur 7 égale à h2. Le maximum de la courbe C correspond au barycentre de l'énergie reçue ; il matérialise l'axe radioélectrique 4, en site, du faisceau du radar 2.

Dans une sixième étape, le procédé consiste à annuler 19 l'angle de site θ du radar 2 pour déterminer la hauteur h₁ à laquelle est positionné le radar 2 sur le véhicule 1. Le procédé mesure par écartométrie, au moyen du goniomètre répondeur 7, l'angle de site θ du radar 2 et translate le goniomètre répondeur 7 sur son axe de déplacement 8 jusqu'à ce que l'angle de site θ soit égal à zéro. Lorsque l'angle de site θ est égal à 0, le goniomètre répondeur 7 est à une hauteur h égale à la hauteur h₁ du radar 2 ; h = h₁.

Dans une septième étape, le procédé consiste à déplacer 20 le maximum de la courbe C à la hauteur h₁. Pour déplacer le maximum de la courbe le procédé consiste à maintenir le goniomètre répondeur 7 à la hauteur h = h₁. Puis il consiste à actionner les moyens de réglage en site du radar 2 jusqu'à ce que le niveau reçu par le goniomètre répondeur 7, positionné à h₁, soit égal au maximum de la courbe C. Lorsque le niveau reçu correspond au maximum, alors il y a égalité entre les hauteurs h₂ et h₁ ; en effet la hauteur h₂ est associée au maximum de la courbe C. Le procédé peut commander les moyens de réglage du positionnement en site du radar 2 au moyen du dispositif d'interface et de contrôle 6.

La figure 6 représente un dispositif selon l'invention. Le dispositif consiste en un banc de réglage de l'alignement de l'axe radioélectrique d'un radar installé sur un véhicule. Le véhicule 1 équipé du radar 2 à aligner est garé sur un plan de roulage 3.

Le banc de réglage comprend un axe de référence 5, un dispositif d'interface et de contrôle 6 et un goniomètre répondeur 7.

Le dispositif d'interface et de contrôle 6 et le goniomètre répondeur 7 peuvent faire partie d'un même boîtier.

Le banc de réglage est positionné de manière déterminée par rapport au plan de roulage 3 pour connaître la géométrie de l'ensemble banc-plan de roulage. Le positionnement est effectué, par exemple, au moyen d'un système de fixation entre le banc et le plan de roulage 3.

Le goniomètre répondeur 7 peut comporter un premier axe de déplacement 8 et un deuxième axe de déplacement 21. Le premier axe de déplacement 8 est perpendiculaire à l'axe de référence 5 et est parallèle au plan de roulage 3. Le deuxième axe de déplacement 21 est perpendiculaire au premier axe de déplacement 8 et à l'axe de référence 5. L'axe de référence 5 est dit axe du banc ; il est lié au plan de roulage 3. Le véhicule 4 est garé de manière déterminée par rapport au plan de roulage.

Le dispositif d'interface et de contrôle 6 est relié au radar 2 par une connexion 22 de préférence bidirectionnelle. Une connexion bidirectionnelle 22 permet au dispositif d'interface et de contrôle 6 d'envoyer un ordre pour configurer le radar 2 en mode de test et elle permet au dispositif d'interface et de contrôle 6 d'acquérir l'azimut mesuré par le radar 2. La connexion 22 permet au dispositif d'interface et de contrôle 6 d'agir directement sur les moyens de réglage en azimut et sur les moyens de réglage en site du radar 2.

Le goniomètre répondeur 7 a une bande de fréquence compatible de la bande de fréquence du radar 2. Il permet de localiser angulairement le radar par une mesure d'écartométrie. Le goniomètre répondeur 7 effectue la mesure d'écartométrie par rapport à son axe radioélectrique 11. Il donne une mesure du niveau reçu pendant l'émission du radar 2. Le goniomètre répondeur 7 est de préférence mobile en translation sur le premier axe de déplacement 8. Il peut, en outre, être mobile en translation sur le deuxième axe de déplacement 21. Le déplacement du goniomètre répondeur 7 sur un axe de déplacement 8, 21 permet de relever la courbe du niveau radar reçu par le goniomètre répondeur 7 en fonction de la position du goniomètre répondeur 7.

Selon une réalisation particulière du banc, le dispositif de montage du goniomètre répondeur 7 comporte, en outre, un axe de rotation 23 autour duquel peut tourner le goniomètre répondeur 7. L'axe de rotation est perpendiculaire aux premier 8 et deuxième 21 axes de déplacement. Lorsque le goniomètre répondeur 7 est tourné autour de son axe de rotation 21 d'un angle de π/2, le premier axe de déplacement 8 devient le deuxième axe de déplacement 21. Suivant cette réalisation, un seul axe de déplacement est nécessaire.

Une connexion 24 entre le goniomètre répondeur 7 et le dispositif d'interface et de contrôle 6 permet un pilotage du déplacement du goniomètre répondeur 7 par le dispositif d'interface et de contrôle 6. La connexion 24 est de préférence bidirectionnelle ; un premier sens permet au dispositif d'interface et de contrôle 6 d'envoyer un ordre de déplacement, le second sens permet au goniomètre répondeur 7 d'envoyer, par exemple, sa position et le niveau d'émission radar reçu Ne. Le premier sens peut, en outre, permettre au dispositif d'interface et de contrôle 6 d'envoyer un ordre pour faire tourner le goniomètre répondeur 7 autour de son axe de rotation 23.

Le goniomètre répondeur 7 et le dispositif d'interface et de contrôle 6 sont décrits dans des boîtiers séparés. D'autres configurations sont envisageables.

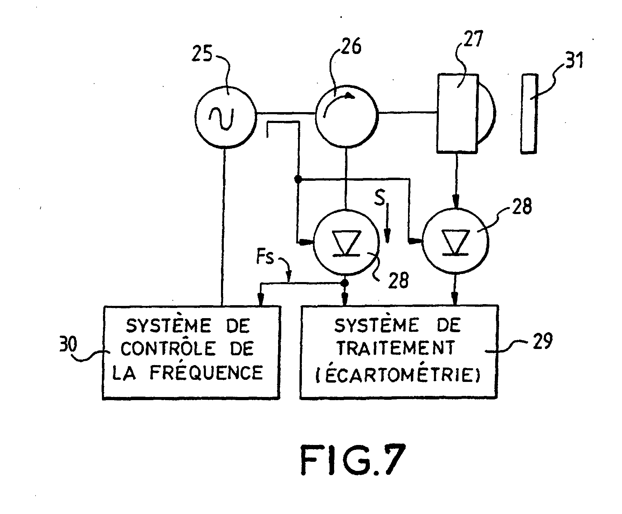

La figure 7 donne une représentation schématique d'un goniomètre répondeur d'un dispositif selon l'invention. Le goniomètre répondeur comprend un oscillateur local 25, un duplexeur 26, une antenne 27, des circuits de réception 28, un système de traitement 29 et un système de contrôle de la fréquence 30. L'oscillateur local 25 génère une onde hyperfréquence dont la fréquence est déterminée par le système de contrôle de la fréquence 30. L'onde hyperfréquence est transmise à l'antenne 27 par l'intermédiaire du duplexeur 26. Les circuits de réception 28 permettent de démoduler les signaux reçus par l'antenne 27. Le système de traitement 29 assure le traitement des signaux démodulés ; en particulier, il détermine l'angle d'écartométrie et mesure le niveau émis par le radar et reçu sur l'antenne 27. En pratique, des moyens d'amplification sont généralement insérés dans la chaîne d'émission et dans la chaîne de réception.

L'oscillateur local 25, le duplexeur 26, l'antenne 27, les circuits de réception 28 et le système de traitement 29 peuvent être similaires aux éléments équivalents du radar installé sur le véhicule.

Le système de contrôle de la fréquence 30 détermine la fréquence à émettre à partir de l'information de fréquence Fs du circuit de réception 28 de la voie somme S, dans le cas d'un radar monopulse à aligner. Dans le cas d'un radar multifaisceaux à aligner l'information de fréquence Fs est issue du récepteur du faisceau central. L'axe de rotation du dispositif de montage du goniomètre répondeur permet de faire tourner l'antenne 27 de 90°. Le dispositif de montage permet ainsi de disposer de manière adéquate l'antenne 27 pour effectuer des mesures de site ou des mesures de gisement.

Lorsque le radar à aligner émet un signal polarisé, par exemple de manière rectiligne, le goniomètre répondeur comprend en outre un élément de polarisation 31. Cet élément de polarisation 31 est, soit un rotateur de polarisation, soit un polariseur. L'élément de polarisation 31 permet d'utiliser le goniomètre répondeur, soit pour effectuer une mesure de gisement, soit pour effectuer une mesure de site. Si le radar à aligner émet un signal qui n'est pas polarisé de manière rectiligne, l'élément de polarisation 31 n'est pas nécessaire.

Dans le cas où le goniomètre répondeur comprend un rotateur de polarisation, celui-ci est amovible. Le rotateur de polarisation est uniquement installé devant l'antenne lorsque celle-ci est tournée de 90°; la rotation de 90° de l'antenne permet d'effectuer des mesures de site. Dans le cas où le goniomètre répondeur comprend un polariseur, celui-ci peut rester à poste quelle que soit l'utilisation du goniomètre répondeur.

## Revendications

1. Procédé de réglage de l'alignement de l'axe radioélectrique (4) d'un radar (2) installé sur un véhicule (1) garé sur un plan de roulage (3), par rapport à une direction déterminée (10) relative au véhicule (1), au moyen d'un banc de réglage comprenant un goniomètre répondeur (7) monté sur un axe de déplacement (8) perpendiculaire à l'axe du banc (5), **caractérisé en ce qu'**il consiste :
- à acquérir (12) les angles α et β, α étant l'azimut sous lequel le radar (2) voit le goniomètre répondeur (7) et β étant l'angle entre la direction déterminée (10) et l'axe du banc (5),
- à déterminer (13) l'azimut γ du radar (2) au moyen du goniomètre répondeur (7) lorsque le radar (2), configuré en mode de test, émet une fréquence continue,
- à égaliser (14) l'azimut γ avec l'angle β en translatant le goniomètre répondeur (7) le long de son axe de déplacement (8),
- à annuler (15) l'azimut α en actionnant les moyens de réglage en azimut du radar.

2. Procédé de réglage de l'alignement de l'axe radioélectrique (4) d'un radar (2) installé sur un véhicule (1) garé sur un plan de roulage (3), par rapport à une direction déterminée (10) relative au véhicule (1), au moyen d'un banc de réglage comprenant un goniomètre répondeur (7) monté sur un axe de déplacement (8) perpendiculaire à l'axe du banc (5), **caractérisé en ce qu'**il consiste :
- à acquérir (12) les angles α et β, α étant l'azimut sous lequel le radar (2) voit le goniomètre répondeur (7) et β étant l'angle entre la direction déterminée (10) et l'axe du banc (5),
- à déterminer (13) l'azimut γ du radar (2) au moyen du goniomètre répondeur (7) lorsque le radar (2), configuré en mode de test, émet une fréquence continue,
- à annuler (16) l'azimut γ en actionnant les moyens de réglage en azimut du radar,
- à égaliser (17) l'angle α avec l'inverse de l'angle β en translatant le goniomètre répondeur (7) le long de son axe de déplacement (8).

3. Procédé selon l'une quelconque des revendications 1 et 2, **caractérisé en ce qu'**il consiste :
- à relever (18) une courbe(C) en site du niveau émis (Ne) par le radar (2) en fonction de la position(h) du goniomètre répondeur (7) pour déterminer le niveau maximum reçu par le goniomètre répondeur (7),
- à annuler (19) l'angle de site (θ) du radar pour déterminer la hauteur(h₁) à laquelle est positionné le radar (2) sur le véhicule (1),
- à déplacer (20) le maximum de la courbe(C)à ladite hauteur(h₁).

4. Procédé selon la revendication 3, **caractérisé en ce que** l'annulation de l'angle de site(θ) consiste :
- à mesurer par écartométrie l'angle de site (θ) au moyen du goniomètre répondeur (7),
- à translater le goniomètre répondeur (7) sur son axe (8) jusqu'à ce que l'angle de site (θ) du radar (2) soit égal à zéro,
- à relever la hauteur (h₁) à laquelle est positionnée le goniomètre répondeur (7) et,
**en ce que** le déplacement du maximum à ladite hauteur (h₁) consiste :
- à modifier les moyens de réglage en site du radar (2) jusqu'à ce que le niveau reçu sur le goniomètre répondeur (7), positionné à ladite hauteur (h₁), soit égal au maximum de la courbe (C).

5. Banc de réglage de l'alignement de l'axe radioélectrique (4) d'un radar (2) installé sur un véhicule (1) garé sur un plan de roulage (3), par rapport à une direction déterminée (10) relative au véhicule (1), pour la mise en oeuvre du procédé selon l'une quelconque des revendications 1 à 4, comprenant :
- un axe de référence (5) lié au plan de roulage (3),
- un goniomètre répondeur (7), positionné par rapport au plan de roulage (3) et ayant une bande de fréquence compatible de celle du radar, pour localiser angulairement par écartométrie le radar (2) lorsque ce dernier émet une fréquence continue suivant un mode de test,
- un dispositif d'interface et de contrôle (6) connecté au radar pour configurer le radar (2) en mode de test et pour acquérir l'azimut a du répondeur goniomètre (7) mesuré par le radar (2).

6. Banc selon la revendication 5, **caractérisé en ce qu'**il comprend en outre :
- un axe de déplacement (21), perpendiculaire à l'axe de référence (5) et au plan de roulage (3), sur lequel est monté le goniomètre répondeur (7) et **en ce que** :
- le goniomètre répondeur (7) donne une mesure du niveau reçu (Ne) pendant l'émission du radar et il est mobile sur son axe de déplacement (21) pour relever la courbe (C) du niveau émis (Ne) en fonction de la direction d'arrivée de l'émission du radar (2).

7. Banc selon la revendication 6, **caractérisé en ce que** :
- le goniomètre répondeur (7) comprend un rotateur de polarisation amovible (31).

8. Banc selon la revendication 6, **caractérisé en ce que**
- le goniomètre répondeur (7) comprend un polariseur (31).

9. Banc selon l'une quelconque des revendications 5 à 8, **caractérisé en ce que** le goniomètre répondeur (7) comprend :
- un oscillateur local (25) pour générer une onde hyperfréquence, un duplexeur (26) pour transmettre l'onde hyperfréquence générée par l'oscillateur local (25),
- une antenne (27) pour émettre l'onde hyperfréquence transmise par le duplexeur (26) et réceptionner les ondes hyperfréquences, des circuits de réception (28) pour démoduler les signaux reçus par l'antenne (27),
- un système de traitement (29) pour traiter les signaux démodulés et,
- un système de contrôle de la fréquence (30) pour déterminer la fréquence de l'onde hyperfréquence générée par l'oscillateur local (25).

10. Banc selon l'une quelconque des revendications 5 à 9, **caractérisé en ce qu'**il comprend :
- un banc de mesure de la position des roues du véhicule pour déterminer la direction de l'axe de poussée du véhicule, la direction déterminée coïncidant avec l'axe de poussée.

## Claims

1. Method for adjusting the alignment of the radioelectric axis (4) of a radar (2) installed on a vehicle (1) parked on a running plane (3), with respect to a determined direction (10) relative to the vehicle (1), by means of an adjustment rig comprising a responder goniometer (7) mounted on an axis of displacement (8) perpendicular to the axis of the rig (5), **characterized in that** it consists:
- in acquiring (12) the angles α and **β,** α being the azimuth at which the radar (2) sees the responder goniometer (7) and β being the angle between the determined direction (10) and the axis of the rig (5),
- in determining (13) the azimuth γ of the radar (2) by means of the responder goniometer (7) when the radar (2), configured in test mode, emits a continuous frequency,
- in equalizing (14) the azimuth γ with the angle β by translating the responder goniometer (7) along its axis of displacement (8),
- in zeroing (15) the azimuth α by actuating the means of azimuthal adjustment of the radar.

2. Method for adjusting the alignment of the radioelectric axis (4) of a radar (2) installed on a vehicle (1) parked on a running plane (3), with respect to a determined direction (10) relative to the vehicle (1), by means of an adjustment rig comprising a responder goniometer (7) mounted on an axis of displacement (8) perpendicular to the axis of the rig (5), **characterized in that** it consists:
- in acquiring (12) the angles α and β, α being the azimuth at which the radar (2) sees the responder goniometer (7) and β being the angle between the determined direction (10) and the axis of the rig (5),
- in determining (13) the azimuth γ of the radar (2) by means of the responder goniometer (7) when the radar (2), configured in test mode, emits a continuous frequency,
- in zeroing (16) the azimuth γ by actuating the means of azimuthal adjustment of the radar,
- in equalizing (17) the angle α with the inverse of the angle β by translating the responder goniometer (7) along its axis of displacement (8).

3. Method according to either one of Claims 1 and 2, **characterized in that** it consists:
- in plotting (18) an elevational curve (C) of the level emitted (Ne) by the radar (2) as a function of the position (h) of the responder goniometer (7) so as to determine the maximum level received by the responder goniometer (7),
- in zeroing (19) the angle of elevation (θ) of the radar so as to determine the height (h₁) at which the radar (2) is positioned on the vehicle (1),
- in displacing (20) the maximum of the curve (C) to the said height (h₁).

4. Method according to Claim 3, **characterized in that** the zeroing of the angle of elevation (θ) consists:
- in measuring, the angle of elevation (θ) by offset measurement by means of the responder goniometer (7),
- in translating the responder goniometer (7) on its axis (8) until the angle of elevation (θ) of the radar (2) is equal to zero,
- in plotting the height (h₁) at which the responder goniometer (7) is positioned and,
**in that** the displacement of the maximum to the said height (h₁) consists;
- in modifying the means of elevational adjustment of the radar (2) until the level received on the responder goniometer (7), positioned at the said height (h₁), is equal to the maximum of the curve (C).

5. Rig for adjusting the alignment of the radioelectric axis (4) of a radar (2) installed on a vehicle (1) parked on a running plane (3), with respect to a determined direction (10) relative to the vehicle (1), for the implementation of the method according to any one of claims 1 to 4, comprising:
- a reference axis (5) tied to the running plane (3),
- a responder goniometer (7), positioned with respect to the running plane (3) and having a frequency band compatible with that of the radar, so as to angularly locate the radar (2) by offset measurement when this radar emits a continuous frequency according to a test mode,
- an interface and control device (6) connected to the radar so as to configure the radar (2) in test mode and to acquire the azimuth α of the goniometer responder (7) measured by the radar (2).

6. Rig according to Claim 5, **characterized in that** it furthermore comprises:
- an axis of displacement (21), perpendicular to the reference axis (5) and to the running plane (3), on which the responder goniometer (7) is mounted and **in that**:
- the responder goniometer (7) gives a measurement of the level received (Ne) during the emission of the radar and it is movable on its axis of displacement (21) so as to plot the curve (C) of the level emitted (Ne) as a function of the direction of arrival of the emission of the radar (2).

7. Rig according to Claim 6, **characterized in that**:
- the responder goniometer (7) comprises a removable polarization rotator (31).

8. Rig according to Claim 6, **characterized in that**:
- the responder goniometer (7) comprises a polarizer (31).

9. Rig according to any one of Claims 5 to 8, **characterized in that** the responder goniometer (7) comprises:
- a local oscillator (25) for generating an ultra-high frequency wave, a duplexer (26) for transmitting the ultra-high frequency wave generated by the local oscillator (25),
- an antenna (27) for emitting the ultra-high frequency wave transmitted by the duplexer (26) and for receiving the ultra-high frequency waves,
- reception circuits (28) for demodulating the signals received by the antenna (27),
- a processing system (29) for processing the demodulated signals and,
- a frequency control system (30) for determining the frequency of the ultra-high frequency wave generated by the local oscillator (25).

10. Rig according to any one of Claims 5 to 9, **characterized in that** it comprises:
- a rig for measuring the position of the wheels of the vehicle so as to determine the direction of the axis of thrust of the vehicle, the determined direction coinciding with the axis of thrust.

## Patentansprüche

1. Verfahren zum Einstellen der Orientierung der radioelektrischen Achse (4) eines in einem auf einer Rollebene (3) geparkten Fahrzeug (1) installierten Radars (2) in bezug auf eine gegebene Richtung (10) relativ zum Fahrzeug (1) mittels einer Einstellbank, die einen an einer Verschiebungsachse (8) senkrecht zur Bankachse (5) angebrachten Antwortgerät-Winkelmesser (7) umfaßt, **dadurch gekennzeichnet, daß**
- die Winkel α und β erfaßt werden (12), wobei α der Azimut ist, unter dem das Radar (2) den Antwortgerät-Winkelmesser (7) sieht, und β der Winkel zwischen der gegebenen Richtung (10) und der Bankachse (5) ist,
- der Azimut γ des Radars (2) mittels des Antwortgerät-Winkelmessers (7) bestimmt wird (13), wenn das in der Prüfbetriebsart befindliche Radar (2) eine Dauerfrequenz aussendet,
- der Azimut γ gleich dem Winkel β gemacht wird (14), indem der Antwortgerät-Winkelmesser (7) längs seiner Verschiebungsachse (8) translatorisch bewegt wird,
- der Azimut α beseitigt wird (15), indem die Einstellmittel in Azimutrichtung des Radars betätigt werden.

2. Verfahren zum Einstellen der Orientierung der radioelektrischen Achse (4) eines in einem auf einer Rollebene (3) geparkten Fahrzeug installierten Radars (2) in bezug auf eine gegebene Richtung (10) relativ zum Fahrzeug (1) mittels einer Einstellbank, die einen an einer Verschiebungsachse (8) senkrecht zur Achse der Bank (5) angebrachten Antwortgerät-Winkelmesser (7) umfaßt, **dadurch gekennzeichnet, daß**
- die Winkel α und β erfaßt werden (12), wobei α der Azimut ist, unter dem das Radar (2) den Antwortgerät-Winkelmesser (7) sieht, und β der Winkel zwischen der gegebenen Richtung (10) und der Achse der Bank (5) ist,
- der Azimut γ des Radars mittels des Antwortgerät-Winkelmessers (7) bestimmt wird (13), wenn das in einer Prüfbetriebsart befindliche Radar (2) eine Dauerfrequenz aussendet,
- der Azimut γ beseitigt wird (16), indem die Einstellmittel in Azimutrichtung des Radars betätigt werden,
- der Winkel α gleich dem Kehrwert des Winkels β gemacht wird, indem der Antwortgerät-Winkelmesser (7) längs seiner Verschiebungsachse (8) translatorisch bewegt wird.

3. Verfahren nach einem der Ansprüche 1 und 2, **dadurch gekennzeichnet, daß**
- eine Höhenkurve (C) des vom Radar (2) ausgesendeten Pegels (Ne) in Abhängigkeit von der Position (h) des Antwortgerät-Winkelmessers (7) aufgenommen wird, um den vom Antwortgerät-Winkelmesser (7) empfangenen maximalen Pegel zu bestimmen,
- der Höhenwinkel θ des Radars beseitigt wird, um die Höhe (h₁) zu bestimmen, auf der das Radar am Fahrzeug (1) angeordnet ist,
- das Maximum der Kurve (C) auf die Höhe (h₁) verschoben wird (20).

4. Verfahren nach Anspruch 3, **dadurch gekennzeichnet, daß** für die Beseitigung des Höhenwinkels (θ)
- durch elektronische Abstandsmessung der Höhenwinkel (θ) mittels des Antwortgerät-Winkelmessers (7) gemessen wird,
- der Antwortgerät-Winkelmesser (7) auf seiner Achse (8) translatorisch bewegt wird, bis dieser Höhenwinkel (θ) des Radars (2) gleich null ist, und
- die Höhe (h₁), auf der der Antwortgerät-Winkelmesser angeordnet ist, aufgenommen wird und
daß für die Verschiebung des Maximums der Höhe h₁
- die Höhenwinkeleinstellmittel des Radars (2) modifiziert werden, bis der Pegel, der von dem auf der Höhe (h₁) angeordneten Antwortgerät-Winkelmesser (7) empfangen wird, gleich dem Maximum der Kurve (C) ist.

5. Bank zum Einstellen der Orientierung der radioelektrischen Achse (4) eines an einem auf einer Rollebene (3) geparkten Fahrzeug (1) installierten Radars (2) in bezug auf eine gegebene Richtung (10) relativ zum Fahrzeug (1) für die Ausführung des Verfahrens nach einem der Ansprüche 1 bis 4, die umfaßt:
- eine Referenzachse (5), die mit der Rollebene (3) in Beziehung steht,
- einen Antwortgerät-Winkelmesser (7), der in bezug auf die Rollebene (3) positioniert ist und ein Frequenzband besitzt, das mit jenem des Radars kompatibel ist, um durch elektronische Abstandsmessung das Radar (2) in Winkelrichtung zu lokalisieren, wenn dieses letztere in einer Prüfbetriebsart eine Dauerfrequenz aussendet,
- eine Schnittstellen- und Steuervorrichtung (6), die an das Radar angeschlossen ist, um das Radar (2) in die Prüfbetriebsart zu versetzen und um den Azimut α des Antwortgerät-Winkelmessers (7), der vom Radar (2) gemessen wird, zu erfassen.

6. Bank nach Anspruch 5, **dadurch gekennzeichnet, daß** sie außerdem umfaßt:
- eine Verschiebungsachse (21), die zur Referenzachse (5) und zur Rollebene (3) senkrecht ist und auf der der Antwortgerät-Winkelmesser (7) angebracht ist, und daß:
- der Antwortgerät-Winkelmesser (7) eine Messung des während der Radaraussendung empfangenen Pegels (Ne) ausgibt und auf der Verschiebungsachse (21) beweglich ist, um die Kurve (C) des ausgesendeten Pegels (Ne) in Abhängigkeit von der Ankunftsrichtung der Emission des Radars (2) aufzunehmen.

7. Bank nach Anspruch 6, **dadurch gekennzeichnet, daß** der Antwortgerät-Winkelmesser (7) eine abnehmbare Polarisationsrotationseinrichtung (31) umfaßt.

8. Bank nach Anspruch 6, **dadurch gekennzeichnet, daß**
- der Antwortgerät-Winkelmesser (7) einen Polarisator (31) umfaßt.

9. Bank nach einem der Ansprüche 5 bis 8, **dadurch gekennzeichnet, daß** der Antwortgerät-Winkelmesser (7) umfaßt:
- einen Hilfsoszillator (25), der eine Ultrahochfrequenzwelle erzeugt, einen Duplexer (26), der die Ultrahochfrequenzwelle, die vom Hilfsoszillator (25) erzeugt wird, überträgt,
- eine Antenne (27), die die vom Duplexer (26) übertragene Ultrahochfrequenzwelle aussendet und Ultrahochfrequenzwellen empfängt,
- Empfangsschaltungen (28), die die von der Antenne (27) empfangenen Signale demodulieren,
- ein Verarbeitungssystem (29), das die demodulierten Signale verarbeitet, und
- ein Frequenzsteuersystem (30), das die Frequenz der vom Hilfsoszillator (25) erzeugten Ultrahochfrequenzwelle bestimmt.

10. Bank nach einem der Ansprüche 5 bis 9, **dadurch gekennzeichnet, daß** sie umfaßt:
- eine Bank für die Messung der Stellung der Räder des Fahrzeugs, um die Richtung der Vorwärtsbewegungsachse des Fahrzeugs zu bestimmen, wobei die gegebene Richtung mit der Vorwärtsbewegungsachse übereinstimmt.
